# EUROPEAN PATENT APPLICATION

(11) **EP 2 022 833 A1**
(43) Date of publication of application: **11.02.2009**
(21) Application number: 08161496.8
(22) Date of filing: 30.07.2008
(51) Int. Cl.: C09J 129/04, B28B 7/38, E02D 3/12, E04G 19/00, C08L 83/00, E02D 9/02

(54) **Eco-friendly glue for use as a release agent in geotechnical and construction engineering applications, use and method of application of same**

(30) Priority: 31.07.2007 IT PR20070064
(71) Applicant: Tecsoil S.R.L., 43015 Noceto (PR) (IT)
(72) Inventor: Sanella, Antonio, 43015 NOCETO - PARMA (IT)
(74) Representative: Leone, Mario

(57) **Abstract**

The invention finds application in the art of geotechnical and civil engineering and namely relates to an eco-friendly glue for use as a release agent; the glue has a polyvinyl alcohol base added with silicone adhesion reducing process aids for treatment of steel construction components designed to be later withdrawn from the soil or a concrete cast, in geotechnical and civil engineering applications. The glue is brush painted or sprayed, allowed to dry and is thus ready for use on the treated component.

## Description

The present invention relates to a novel and different application of an eco-friendly polyvinyl alcohol-based glue added with silicone process aids, as is usually used for gluing various materials, such as paper, paperboard, wood, tiles.

In geotechnical and civil engineering applications, particularly for coating steel construction components designed to be later withdrawn from the soil or a concrete cast, such as sheet piles or supporting structures, soil, ballast and embankment retention structures and else.

For instance, problems arise when removing sheet piles once concrete has been cast therearound, because the casting tension creates some adhesion between the two components, requiring a considerable withdrawal force.

The prior art uses:
- animal fats,
- acrylic-based plasticizers,
- naphthalene sulphonate-based plasticizers,
- melamine sulphonate-based plasticizers,
- synthetic oil-based products.

The object and advantage of the present invention is to provide a novel material for reducing adhesion between concrete and the components to be removed.

Particularly, the present material is a polyvinyl alcohol-based glue added with silicone process aids, that is usually used in paper industry as a binder.

The product is mainly composed of polyvinyl alcohol and organic and inorganic process aids; the polyvinyl alcohol is mainly of medium molecular weight and medium degree of hydrolysis.

The process aids are all biodegradable products.

The product is totally water miscible and is fully biodegradable in water solutions without releasing any toxic residue.

With the novel use of the above glue, adhesion forces are greatly reduces, wherefore sheet piles or other components can be more easily removed from concrete.

These objects and advantages are fulfilled by the polyvinyl alcohol-based glue added with silicone process aids of the present invention, which is characterized by the annexed claims.

For instance, sheet piles are installed prior to concrete casting and then removed.

Before installation the sheet piles or components have to be brush painted or sprayed with the polyvinyl alcohol-based glue added with silicone process aids and allowed to dry; then they can be normally used.

Advantages are achieved during withdrawal, which is facilitated by such coated glue.

Obviously, the use of this polyvinyl alcohol-based glue added with silicone process aids as an antiadhesion, i.e. release agent, may be extended to all geotechnical and civil applications in general.

## Claims

1. An eco-friendly glue for use as a release agent for geotechnical and civil engineering purposes, **characterized in that** it has a polyvinyl alcohol base added with silicone adhesion reducing process aids for treatment of steel construction components that are designed to be later withdrawn from the soil or a concrete cast, in geotechnical and civil engineering applications.

2. An eco-friendly glue as claimed in claim 1, **characterized in that** it is brush painted or sprayed, allowed to dry and is thus ready for use on the treated component.

3. A use of a glue as claimed in claim 1 for geotechnical and civil engineering purposes, as an adhesion reducing agent for treatment of steel construction components designed to be later withdrawn from the soil or a concrete cast.

4. A method of application of an eco-friendly glue as claimed in claim 1, **characterized in that** it includes the steps of brush painting or spraying it and allowing it to dry for making it ready for use on the treated component.
